# EUROPÄISCHE PATENTSCHRIFT

(11) **EP 3 868 636 B1**
(45) Veröffentlichungstag und Bekanntmachung des Hinweises auf die Patenterteilung: **03.04.2024**
(21) Anmeldenummer: 21158438.8
(22) Anmeldetag: 22.02.2021
(51) Int. Cl.: B62K 3/00, B62K 15/00

(54) **TRETROLLER**
KICKSCOOTER
TROTINETTE

(30) Priorität: 21.02.2020 DE 102020104667
(43) Veröffentlichungstag der Anmeldung: 25.08.2021
(73) Patentinhaber: SmarT Trike Mnf. Pte. Ltd., Singapore 069538 (SG)
(72) Erfinder: Ponticelli, Pius, 4616 Kappel (CH)
(74) Vertreter: Patentanwälte und Rechtsanwalt Weiß, Arat & Partner mbB

(56) Entgegenhaltungen:
- DE-A1-102012 204 909
- DE-U1-202018 100 928
- US-A1- 2019 241 232

## Beschreibung

### Technisches Gebiet

Die Erfindung betrifft einen Tretroller.

### Stand der Technik

Derartige Tretroller sind in vielfältiger Form und Ausgestaltung bekannt.

Die DE 10 2012 204 909 A1 , welche die Präambel des Anspruchs 1 zeigt, offenbart einen Tretroller mit drei Rädern, dessen Lenkstange einklappbar ist, damit der Tretroller leichter verstaut und transportiert werden kann.

Die EP 3 156 311 A1 offenbart einen Tretroller mit drei Rädern, dessen Lenkstange in zwei verschiedenen Stellungen einbaubar ist, wobei eine Stellung dem Verstauen und Transportieren dient.

Die WO 2017 190 173 A1 offenbart zahlreiche Tretroller-Varianten mit einklappbaren Lenkstangen.

Nachteilig an bekannten Tretrollern mit einklappbarer Lenkstange sind unter anderem die oftmals schwierige Bedienung sowie die Herausnehmbarkeit der Lenkstange, was zu deren Verlust führen kann.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führt der Gegenstand des Anspruchs 1. Vorteilhafte Ausgestaltungen sind in den Unteransprüchen beschrieben.

Ein Tretroller gemäss der vorliegenden Erfindung umfasst ein Fahrgestell, zumindest ein Vorderrad und zumindest ein Hinterrad sowie eine Lenkstange. Die Lenkstange ist mit dem Fahrgestell formschlüssig verbunden.

Ein Abschnitt der Lenkstange bildet zusammen mit einem Abschnitt des Fahrgestells oder mit einem am Fahrgestell befestigten Abschnitt ein Drehgelenk, welches eine Drehung der Lenkstange relativ zum Fahrgestell erlaubt, so dass die Lenkstange zwischen einer fahrbereiten Stellung und einer Transport-Stellung hin- und her bewegt werden kann.

Der vorbeschriebene Formschluss zwischen Lenkstange und Fahrgestell wird auch während der vorstehend erwähnten Drehung gewahrt, da beide Teile nur relativ zueinander verdreht werden können, aber ohne Demontage nicht trennbar sind. Die formschlüssige Verbindung zwischen Lenkstange und Fahrgestell ist hierbei vorzugsweise dergestalt, dass der einzige Freiheitsgrad der Bewegung eine Rotation um eine vorgegebene Drehachse ist. Stellt eine nachfolgend noch näher beschriebene Schraube oder dergleichen die Drehachse bereit, so ist deren Längsachse gleichzeitig die Drehachse.

Zwischen einander zugewandte Flächen oder Flächenabschnitten der Lenkstange und des Fahrgestell-Abschnitts oder des am Fahrgestell befestigten Abschnitts liegt ein Gelenkspalt vor. Das Fahrgestell oder der am Fahrgestell befestigte Abschnitt oder der Abschnitt der Lenkstange umfasst ein Sperrelement, welches zwischen einer eingefahrenen und einer ausgefahrenen Position hin- und herbewegt werden kann. In der eingefahrenen Position ragt das Sperrelement nicht in den Gelenkspalt hinein, um die Drehung der Lenkstange relativ zum Fahrgestell zu erlauben. In der ausgefahrenen Position ragt das Sperrelement in den Gelenkspalt hinein, so dass das Fahrgestell oder der am Fahrgestell befestigte Abschnitt mit dem Abschnitt der Lenkstange in Wechselwirkung tritt, um die Drehung der Lenkstange relativ zum Fahrgestell zu blockieren. Diese Wechselwirkung wird vorzugsweise wie vorstehend beschrieben von dem Sperrelement bewerkstelligt, welches in einem der vorgenannten Abschnitte angeordnet ist. Die nachstehend noch näher beschriebenen Sperrelement-Aufnahmen sind entsprechend im gegenüberliegenden bzw. korrespondierenden Abschnitt aufgenommen. Das Fahrgestell oder die Lenkstange ist mit einer Betätigungsanordnung für das Sperrelement verbunden. Die Betätigungsanordnung umfasst ein Betätigungselement, welches von einem Benutzer betätigt werden kann. Die Betätigungsanordnung ist eingerichtet, um bei einer Betätigung des Betätigungselements durch einen Benutzer das Sperrelement von der ausgefahrenen in die eingefahrene Position zu bewegen.

Das Fahrgestell ist vorzugsweise das Chassis des Tretrollers, an welchem die wesentlichen Elemente befestigt sind, beispielsweise die Räder, ggf. ein Trittbrett, etc. Ein Teil des Fahrgestells kann auch als Trittbrett ausgebildet sein, so dass kein separates Trittbrett vorhanden sein muss. Auch weitere Anbauten und Aufbauten - in Anlehnung an den Aufbau üblicher KFZ beispielsweise die Karosserie, welche am Fahrgestell/Chassis befestigt ist - können am Fahrgestell des Tretrollers festgelegt werden.

In der fahrbereiten Stellung und vorzugsweise auch in der Transport-Stellung ist die Lenkstange relativ zum Fahrgestell vorzugsweise nur nach Betätigen des Betätigungselements bewegbar, d.h. drehbar.

Die Verbindung zwischen Lenkstange und Fahrgestell kann direkt oder indirekt sein. So kann ein Fahrgestell-seitiger Teil des Drehgelenks einerseits durch einen Abschnitt des Fahrgestells selbst bereitgestellt werden. Alternativ kann der Fahrgestell-seitige Teil des Drehgelenks, durch einen Abschnitt einer am Fahrgestell befestigten Karosserie oder durch einen anderen am Fahrgestell befestigten Abschnitt mit dem Fahrgestell verbunden sein. Der letztgenannte Abschnitt kann vorzugsweise ausschliesslich dazu dienen, das Drehgelenk zu bilden.

Eine Drehachse des Drehgelenks, welche die mögliche Drehung der Lenkstange relativ zum Fahrgestell vorgibt, kann aus einer Schraube oder aus einem Bolzen gebildet sein, welcher sowohl einen Teil der Lenkstange als auch einen Teil des Fahrgestells durchdringt und beide formschlüssig miteinander verbindet. Diese formschlüssige Verbindung sorgt hierbei dafür, dass Lenkstange und Fahrgestell nicht ohne weiteres demontiert werden können, erlaubt aber eine Drehung beider Teile relativ zueinander.

Alternativ kann auch an andere formschlüssige Verbindungsmöglichkeiten gedacht sein. So kann ein Abschnitt der Lenkstange beispielsweise in eine hinterschnittene Öffnung eingesetzt werden, welche auf dem Fahrgestell vorgesehen ist. Auf diese Weise werden beide Teile formschlüssig miteinander verbunden, ohne dass es einer Schraube oder eines Bolzens bedarf. Auch bei einer solchen Variante können die nachfolgend noch beschriebenen Kugellager oder dergleichen vorhanden sein.

Weiterhin kann anstelle einer Schraube oder eines Bolzens als separates Teil daran gedacht sein, dass die Lenkstange, insbesondere der Gelenk-bildende Abschnitt, bspw. der Flansch-artige Endabschnitt einen bolzenartigen Vorsprung bzw. einen bspw. stoffschlüssig angeformten Bolzen umfasst. Der Gelenk-bildende Abschnitt des Fahrgestells kann ein korrespondierendes Loch oder Sackloch zur Aufnahme des Bolzens umfassen, so dass beide gemeinsam ein Drehgelenk bilden. Als Schutz gegen ein Herausnehmen der Lenkstange kann in diesem Fall angedacht sein, das Loch oder Sackloch mit einer Hinterschneidung auszustatten, welche den angeformten Bolzen formschlüssig sichert. Somit kann auf eine Schraube oder einen Bolzen als separates zusätzliches Bauteil verzichtet werden. Natürlich kann das Loch oder Sackloch auch an der Lenkstange und der angeformte Bolzen oder dergleichen entsprechend am Fahrgestell angeordnet sein.

Der vorgenannte Abschnitt der Lenkstange, welcher einen Teil des Drehgelenks bereitstellt, ist vorzugsweise ein Flansch-artiger Endabschnitt. Man könnte ihn auch als "Gelenk-bildenden Abschnitt" bezeichnen, wobei er nicht zwingend, aber doch vorzugsweise, Flansch-artig, d.h. unten verbreitert, ausgeführt sein muss.

Der Tretroller kann genau ein Sperrelement umfassen. Der Tretroller kann auch genau zwei Sperrelemente umfassen, was bevorzugt ist. Ferner kann der Tretroller auch drei oder mehr Sperrelemente umfassen. Unabhängig davon, ob vom Sperrelement im Rahmen der vorliegenden Erfindung im Singular oder im Plural die Rede ist, kann stets an beide Möglichkeiten gedacht sein. Obwohl zwei Sperrelemente bevorzugt sind, kann auch an genau ein Sperrelement, genau drei Sperrelemente oder mehr Sperrelemente gedacht sein.

Die Wechselwirkung zwischen dem Abschnitt des Fahrgestells oder dem am Fahrgestell befestigten Abschnitt einerseits und dem Abschnitt der Lenkstange andererseits kann kraft- oder formschlüssig sein. Wie bereits beschrieben wird diese Wechselwirkung vorzugsweise durch das in einem der Abschnitte befindliche Sperrelement bereitgestellt. Bei einer kraftschlüssigen Verbindung kann beispielsweise zumindest ein aus einem Abschnitt in den Gelenkspalt hineinragendes Sperrelement gegen den gegenüberlegenden Abschnitt gepresst werden, um so den Kraftschluss zu erzeugen. Vorzugsweise erfolgt die Wechselwirkung jedoch formschlüssig, wobei das zumindest eine Sperrelement beispielsweise in eine unten näher beschriebene Sperrelement-Aufnahme eingreift.

Die Verbindung zwischen dem Fahrgestell oder der Lenkstange einerseits und der Betätigungsanordnung andererseits umfasst auch Ausführungsbeispiele, in denen ein Teil des Fahrgestells oder ein Teil der Lenkstange als Betätigungsanordnung ausgebildet ist. Die Erfindung ist diesbezüglich nicht auf Ausführungsformen beschränkt, wonach die Betätigungsanordnung aus zumindest einem separaten Bauteil gebildet ist, welches dann am Fahrgestell oder an der Lenkstange befestigt wird.

Das Betätigungselement kann ein Druckknopf, ein Hebel oder dergleichen sein.

Der Abschnitt der Lenkstange kann ein Flansch-artiger Endabschnitt sein. Soweit nicht anders spezifiziert bezeichnet der "Abschnitt" der Lenkstange im Folgenden stets einen Gelenk-bildenden Abschnitt, welcher vorzugsweise (aber nicht zwingend) als Flansch-artiger Endabschnitt ausgeführt ist.

Der Tretroller kann eine Trittfläche umfassen, wobei der Abschnitt des Fahrgestells oder der an dem Fahrgestell befestigte Abschnitt in einem Winkel von 40° bis 50° zur Trittfläche geneigt ist. Der Abschnitt der Lenkstange ist vorzugsweise relativ zu einer gedachten Längsachse der Lenkstange ebenfalls um 40° bis 50° geneigt, so dass die Lenkstange in der fahrbereiten Stellung relativ zur Trittfläche in einem Winkel von 80° bis 100°, vorzugsweise etwa 90°, montiert werden kann. Die vorbeschriebenen Neigungen beziehen sich jeweils vorzugsweise auf die Flächen bzw. Flächenabschnitte der beiden Abschnitte, welche zusammen den Gelenkspalt bilden.

Soweit nicht anders spezifiziert bezeichnet der "Abschnitt" des Fahrgestells im Folgenden stets einen Gelenk-bildenden Abschnitt, welcher entweder ein Teil des Fahrgestells ist oder am Fahrgestell befestigt ist.

Der Tretroller kann derart eingerichtet sein, dass das Drehgelenk eine Drehung der Lenkstange um zumindest 180° erlaubt. Als Drehachse dient hierbei vorzugsweise eine nachfolgend noch näher beschriebene Schraube oder ein Bolzen.

Der Tretroller kann eine Sperrelement-Aufnahme zur Aufnahme des Sperrelements umfassen. Ferner kann der Tretroller auch eine Schrauben- oder Bolzen-Aufnahme zur Aufnahme einer Schraube oder eines Bolzens umfassen, wobei die Schraube oder der Bolzen eine Drehachse des Drehgelenks definiert. Hierbei kann an genau eine, genau zwei oder an drei oder mehr Sperrelement-Aufnahmen gedacht sein. Die zumindest eine Sperrelement-Aufnahme kann sowohl im Abschnitt des Fahrgestells oder in dem am Fahrgestell befestigten Abschnitt als auch im Abschnitt der Lenkstange sitzen.

Ein Abstand zwischen der Sperrelement-Aufnahme und der Schrauben- oder Bolzenaufnahme kann zumindest 30 mm betragen. Dieser Abstand wird vorzugsweise zwischen den jeweiligen geometrischen Mittelpunkten von Sperrelement-Aufnahme und Schrauben- oder Bolzenaufnahme gemessen.

Die den Gelenkspalt bildenden Flächen können einen Durchmesser von zumindest 80 mm aufweisen. Falls die Flächen nicht rund sind, was möglich ist, gilt dies für den kleinsten Durchmesser.

Vorzugsweise umfasst der Tretroller vorne genau zwei Räder und hinten genau ein Rad. Vorzugsweise ist die Lenkstange in der fahrbereiten Stellung - auch mittels der Sperrelemente - starr mit dem Fahrgestell verbunden, solange das Betätigungselement nicht betätigt wird.

Die Sperrelemente können als Bolzen, Stifte oder dergleichen ausgeführt sein. Die Form der Sperrelement-Aufnahmen ist entsprechend komplementär geformt und kann Sackloch-artig gebildet sein.

In einer bevorzugten Ausführungsform umfasst der Tretroller genau zwei Sperrelemente. Auf diese Weise ist eine gewünschte Redundanz gegeben. Falls ein Sperrelement funktionsuntüchtig wird, führt das zweite Sperrelement die Sperrfunktion weiter aus. Vorzugsweise werden beide Sperrelemente von genau einer Betätigungsanordnung bewegt, um eine Drehung der Lenkstange relativ zum Fahrgestell zu erlauben. Trotz der vorbeschriebenen Redundanz im Falle einer Zerstörung eines Sperrelements können somit beide Sperrelemente gleichzeitig mit geringem Aufwand entsperrt werden, um ein Drehen der Lenkstange zu erlauben.

Ferner ist es vorteilhaft, die Lenkstange direkt am Fahrgestell zu befestigen. Einerseits werden somit nur wenige Teile benötigt, um den Tretroller zu bauen. Andererseits wird somit die Anzahl an - stets störanfälligen bzw. empfindlichen - kraft-, form- oder stoffschlüssigen Verbindungen zwischen einzelnen Teilen reduziert, weil nur sehr wenige Teile vorhanden sind. Hierbei ist es besonders vorteilhaft, diejenige Fläche bzw. denjenigen Flächenabschnitt des Gelenk-bildenden Abschnitts des Fahrgestells, welche mit der gegenüberliegenden Fläche bzw. dem gegenüberliegenden Flächenabschnitt der Lenkstange den Gelenkspalt bildet, im Wesentlichen in einem 45°-Winkel zur Trittfläche anzuordnen. Entsprechend kann auch diejenige Fläche bzw. denjenigen Flächenabschnitt des Gelenk-bildenden Abschnitts der Lenkstange, der als Flansch-artiger Endabschnitt ausgeführt sein kann, einen 45°-Winkel relativ zur gedachten Längsrichtung der Lenkstange aufweisen. Auf diese Weise kann ein sehr einfaches und wenig störanfälliges Drehgelenk bereitgestellt werden, welches eine kompakte Transport-Stellung erlaubt. Auf diese Weise kann die Lenkstange in der fahrbereiten Stellung in einer komfortablen 90°-Stellung relativ zur Trittfläche angeordnet werden. In der Transport-Stellung sind dann die Trittfläche und die Lenkstange im Wesentlichen parallel zueinander angeordnet und bilden eine Winkel von 0°. Es kann alternativ auch an andere Winkel gedacht sein, bevorzugt sind aber jeweils Winkel von 40° bis 50°.

Vorzugsweise besitzen die Sperrelemente nur einen Freiheitsgrad der Translation. Vorzugsweise ist die erlaubte Bewegungsrichtung der Sperrelemente orthogonal zum Gelenkspalt bzw. zu den Gelenk-bildenden Abschnitten von Lenkstange und Fahrgestell ausgerichtet. Die Sperrelement-Aufnahmen und/oder die Sperrelemente können einen sich entlang ihrer Längsrichtung verändernden Radius oder Umfang aufweisen. Insbesondere kann beispielsweise an Konus-förmige Ausgestaltungen gedacht sein. Beispielsweise kann die Sperrelement-Aufnahme, welche im Wesentlichen aus einer Öffnung in einem der vorbeschriebenen Flächen(abschnitte) und einem Loch oder Sackloch besteht, an der Öffnung einen grösseren Umfang aufweisen als beispielsweise am Boden des Sacklochs. Entsprechend kann eine freie Spitze des Sperrelements, welche zuerst in die Sperrelement-Aufnahme einfährt, einen geringeren Umfang aufweisen, als das gegenüberliegende Ende des Sperrelements. Auf diese Weise kann ein einfaches Arretieren in der fahrbereiten und in der Transport-Stellung erreicht werden. Ferner kann somit ein einfaches und sicheres Zentrieren in den vorbeschriebenen Stellungen erreicht werden, welches dem Benutzer keine Mühen bereitet.

Indem das Fahrgestell und die Lenkstange formschlüssig miteinander verbunden sind, wird verhindert, dass beide Teile versehentlich voneinander getrennt werden. Hierfür sorgt die bereits beschriebene unverlierbare Verbindung durch eine Schraube oder dergleichen, welche nur einen einzigen Bewegungsfreiheitsgrad der Rotation um die Drehachse des Drehgelenks erlaubt, jedoch keine anderen rotatorischen oder translatorischen Freiheitsgrade zulässt. Insbesondere bei Verwendung von Kugellagern oder dergleichen werden ausserdem kleine Spaltmasse und eine genaue und spielfreie Montage ermöglicht. Die Verbindung über eine Schraube oder dergleichen als Drehachse macht es zudem möglich, das Drehgelenk mitsamt den zur Sperrung der Drehbewegung nötigen Elementen, d.h. dem zumindest einen Sperrelement und der korrespondierenden zumindest einen Sperrelement-Aufnahme schlicht aus zwei im Wesentlichen planen Flächen bzw. Flächenabschnitten des Fahrgestells einerseits und der Lenkstange andererseits zu bilden. Diese Flächenabschnitte sind vorzugsweise in den oben bereits beschriebenen Winkeln zur Trittfläche bzw. zur Längsrichtung der Lenkstange angeordnet.

Alternativ zu den vorbeschriebenen im Wesentlichen planen Flächenabschnitten kann einer der Flächenabschnitte natürlich auch eine Vertiefung aufweisen oder als Vertiefung ausgestaltet sein, wobei der korrespondierende Flächenabschnitt in diese Vertiefung eingreift. So kann beispielsweise der (Gelenk-bildende) Abschnitt des Fahrgestells eine (vorzugsweise kreisförmige) Vertiefung aufweisen, in welche der (Gelenk-bildende) Abschnitt der Lenkstange eingesetzt und danach verschraubt wird. Diese Vertiefung wirkt dann als Führung, um die Stabilität zu erhöhen.

Vorzugsweise gleiten die vorbeschriebenen Flächenabschnitte nicht unmittelbar aufeinander. Stattdessen sind zumindest ein Kugellager oder zumindest ein anderes geeignetes Lager im Bereich des Gelenkspalts vorgesehen, um das Gleiten beider Flächenabschnitte und somit die Drehung der Lenkstange relativ zum Fahrgestell zu erleichtern. Die Flächenabschnitte selbst können jedoch aus einem Material beschaffen sein, welches ein reibungsarmes Gleiten erlaubt.

Indem die Flächenabschnitte möglichst gross bemessen sind, wird eine hohe Stabilität erreicht und die Lenkstange wird relativ zum Fahrgestell auch bei grossen Kräften sicher gehalten. Es kann insbesondere daran gedacht sein, dass der Flansch-artige Endabschnitt einen Durchmesser von zumindest 50 Millimetern, vorzugsweise zumindest 60 Millimetern, noch bevorzugter zumindest 70 Millimetern und weiter bevorzugt zumindest 80 Millimetern aufweist. Hierbei ist ein Abstand zwischen der das Drehgelenk bildenden Schraube oder dergleichen auf der einen Seite und den Sperrelementen oder Sperrelement-Aufnahmen auf der anderen Seite möglichst gross bemessen und liegt vorzugsweise bei zumindest 20 Millimetern, bevorzugt bei zumindest 25 Millimetern. Der Abstand ist hierbei vorzugsweise durch die geometrischen Mittelpunkte von Schraube oder dergleichen und Sperrelement-Aufnahme definiert.

Die Lenkstange ist vorzugsweise gebildet aus dem Flansch-artigen Endabschnitt und einem Rohr, wobei beide Teile durch ein Verbindungselement wie beispielsweise eine Schraube oder einen Bolzen oder ein Niet oder einen Federstift miteinander verbunden sind. Vorzugsweise sind beide Teile derart verbunden, dass sie sich relativ zueinander nicht bewegen können. Das Rohr kann eine Sitzschale oder einen Sitzkoffer umfassen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 einen Ausschnitt eines Tretrollers 1 in teilweise geschnittener Seitenansicht, und in
Figur 2 eine Explosionszeichnung des Ausschnitts gemäss Figur 1 umfassend ein Vorderrad 3 in Seitenansicht, und in
Figur 3 eine perspektivische Ansicht eines Ausschnitts des Tretrollers 1 vor dem Einbau einer Lenkstange 4, sowie in
Figur 4 den Ausschnitt nach Figur 1, wobei eine Lenkstange 4 um 180° gedreht wurde.

### Ausführungsbeispiel

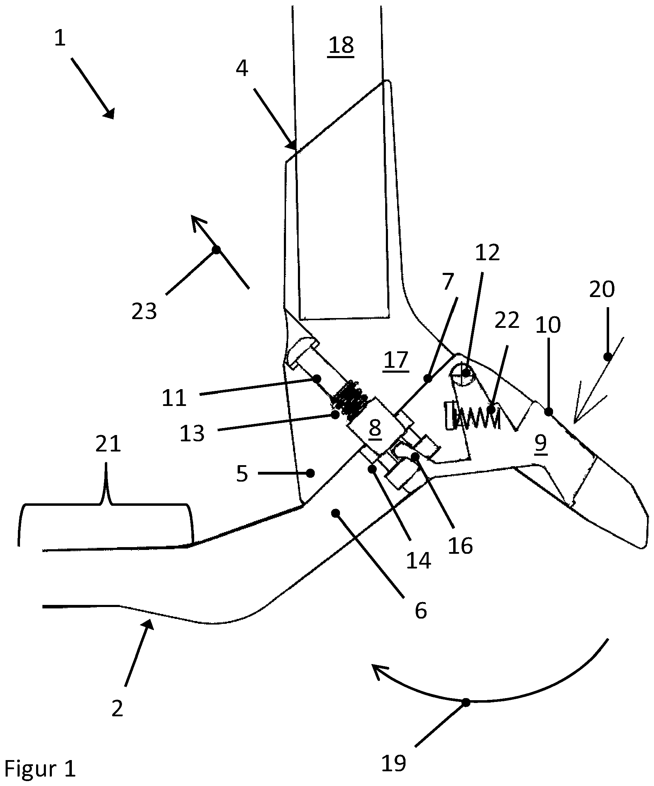

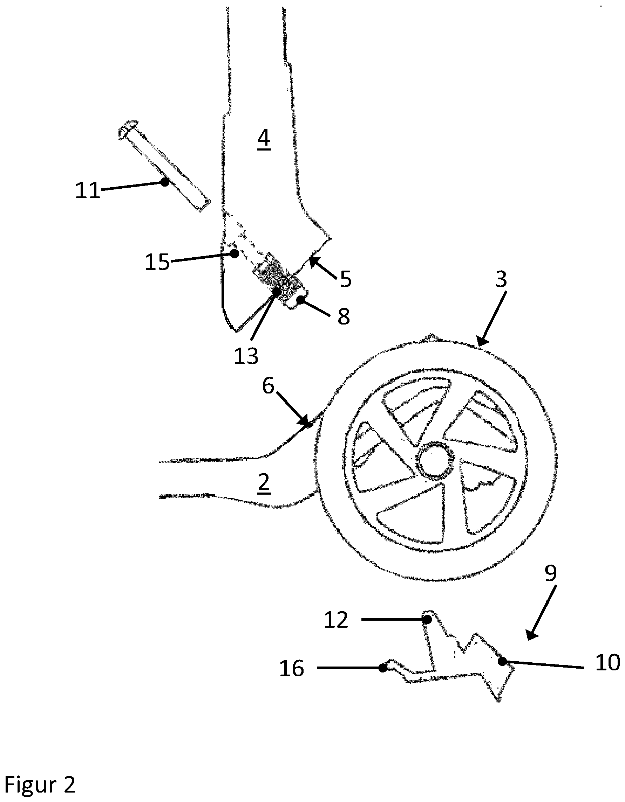

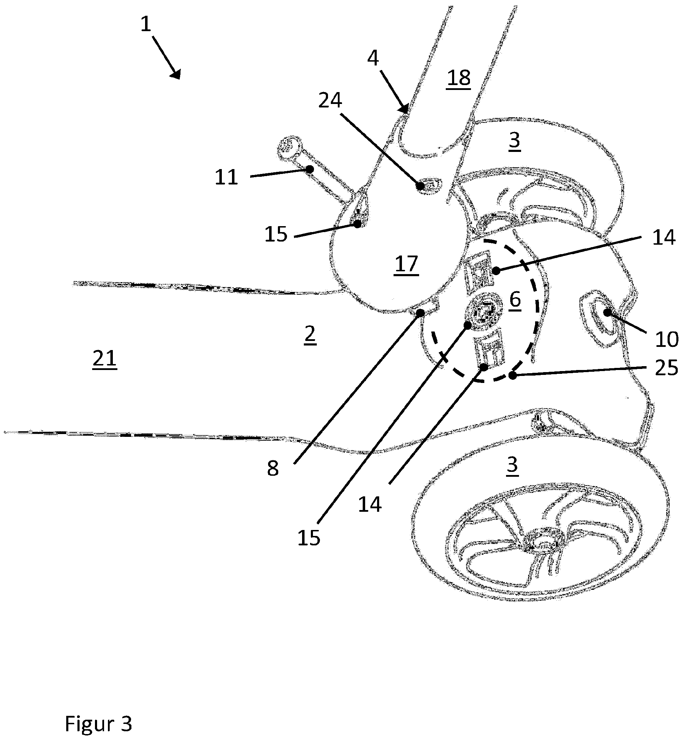

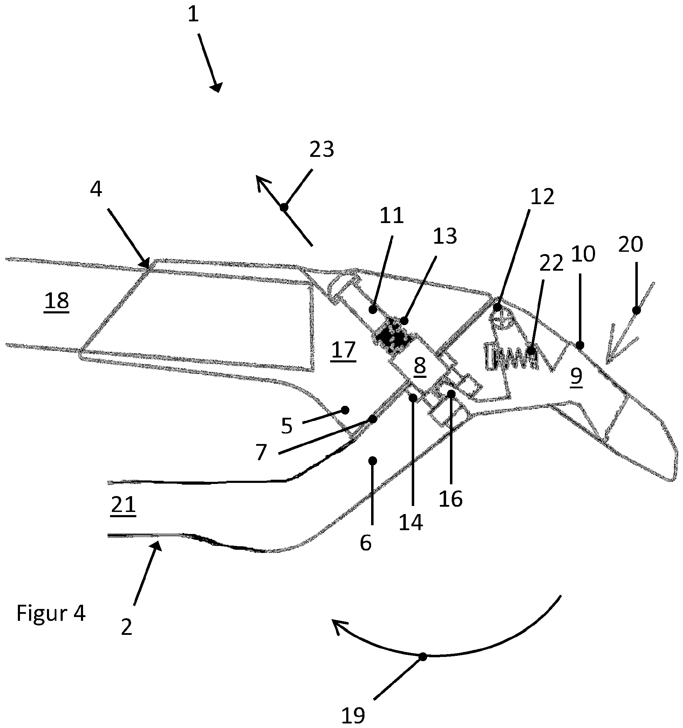

In den Figuren ist jeweils ein Ausschnitt des Tretrollers 1 dargestellt. Ein Fahrgestell 2 und eine Lenkstange 4 sind erkennbar. In den Figuren 2 und 3 sind ferner Vorderräder 3 bzw. zumindest ein Vorderrad 3 dargestellt. Die Lenkstange 4 umfasst einen Gelenk-bildenden Abschnitt 5 und das Fahrgestell 2 umfasst einen Gelenk-bildenden Abschnitt 6. Der Gelenk-bildende Abschnitt 5 der Lenkstange 4 befindet sich an einem Flansch-artigen Endabschnitt 17, welcher mit einem Rohr 18 verbunden ist. Zwischen diesen Abschnitten 5, 6 liegt ein Gelenkspalt 7, der in den Figuren 1 und 4 erkennbar ist. Ferner ist ein Sperrelement 8 erkennbar. Eine Betätigungsanordnung 9 umfasst ein Betätigungselement 10, einen Drehpunkt 12 und einen Fortsatz 16. Weiterhin sind eine Schraube 11 und eine Feder 13 erkennbar. In Figur 3 sind zwei Sperrelement-Aufnahmen 14 erkennbar sowie eine Schrauben-Aufnahme 15. Ausserdem ist ein Teil einer Trittfläche 21 angedeutet.

Bezugnehmend auf die Figuren 1 bis 4 erklärt sich die Funktionsweise der erfindungsgemässen Vorrichtung folgendermassen:
Der Tretroller 1 wird, entweder ab Werk oder vom Benutzer, montiert, indem die Lenkstange 4 mit Hilfe der Schraube 11 am Fahrgestell 2 festgelegt wird. Die Schraube 11 wird hierzu durch die Schrauben-Aufnahme 15 im Flansch-artigen Endabschnitt 17 der Lenkstange 4 geführt und dringt dann in die Schrauben-Aufnahme 15 in der Mitte des Gelenk-bildenden Abschnitts 6 des Fahrgestells 2 ein, wo sie durch Einschrauben festgelegt wird. In Figur 3 ist sehr grob ein Flächenabschnitt 25 des gelenk-bildenden Abschnitt 6 dargestellt, welcher gemeinsam mit dem gegenüberliegenden Flächenabschnitt des Flansch-artigen Endabschnitt 17 (in Figur 3 wegen der gewählten Perspektive verborgen) den Gelenkspalt 7 bildet.

Vorzugsweise sind im Bereich der Schrauben-Aufnahmen 15 Kugellager oder dergleichen vorgesehen, um eine Drehung der Lenkstange 4 um die Schraube 11 als Drehachse zu erlauben, wenn das Betätigungselement 10 betätigt wird.

Der Zustand vor der Montage ist in den Figuren 2 und 3 gezeigt. Nach der Montage sind die Einzelteile des Tretrollers 1 so angeordnet, wie in Figur 1 dargestellt. Die Vorderräder 3 wurden in den Figuren 1 und 4 der besseren Übersicht halber nicht dargestellt.

Im Flansch-artigen Endabschnitt 17 ist ein Sperrelement 8 vorgesehen, welches von einer Feder 13 vorgespannt wird, um nach der Montage in die Sperrelement-Aufnahme 14 einzugreifen. Der gezeigte Tretroller 1 umfasst zwei Sperrelemente 8 mit zwei korrespondierenden Sperrelement-Aufnahmen 14. Die Betätigungsanordnung 9 umfasst entsprechend zwei Fortsätze 16, welche allerdings in den Seitenansichten der Figuren 1, 2 und 4 nicht erkennbar sind. Jeder Fortsatz 16 bewegt je ein Sperrelement 8.

Die Schraube 11 wird mittig zwischen beiden Sperrelementen 8 montiert.

In der in Figur 1 dargestellten Konfiguration kann der Benutzer mit dem Tretroller 1 fahren, die Lenkstange 4 befindet sich in der fahrbereiten Stellung. Ein Winkel zwischen Trittfläche 21 und Rohr 18 bzw. zwischen Trittfläche 21 und einer gedachten Längsachse der Lenkstange 4 beträgt in etwa 90°. Die Lenkstange 4 ist gegenüber dem Fahrgestell 2 unbeweglich angeordnet, solange der Benutzer das Betätigungselement 10 nicht betätigt. Der Tretroller 1, welcher vorzugsweise zwei Vorderräder 3 und ein Hinterrad (nicht dargestellt) umfasst, kann durch Neigen der Lenkstange 4 quer zur Fahrtrichtung gelenkt werden. Ein auf diese Weise steuerbarer Tretroller 1, insbesondere der Lenkmechanismus, ist bekannt.

Will der Benutzer den Tretroller 1 nun verstauen, so drückt er das Betätigungselement 10 in Richtung des Pfeils 20. Dies führt dazu, dass die gesamte Betätigungsanordnung 9 um den Drehpunkt 12 verschwenkt wird. Dabei drücken die Fortsätze 16 die Sperrelemente 8 aus den Sperrelement-Aufnahmen 14 heraus. Das Verschwenken erfolgt in Richtung eines Pfeils 19.

Das Drücken des Betätigungselements 10 und das vorbeschriebene Verschwenken um den Drehpunkt 12 erfolgt gegen die Vorspannkraft einer zweiten Feder 22. Bei der Betätigung des Betätigungselements 10 muss die Vorspannkraft der zweiten Feder 22 überwunden werden.

Ferner erfolgt das Herausfahren bzw. Herausdrücken der Sperrelemente 8 aus den Sperrelement-Aufnahmen 14 gegen die Vorspannkraft der Feder 13. Die Feder 13 beaufschlagt die Sperrelemente 8 mit einer Kraft, welche entgegen einer Pfeilrichtung 23 wirkt.

Vorzugsweise ist durch einen Anschlag (nicht dargestellt) oder dergleichen eine maximale Rotation der Betätigungsanordnung 9 in der Weise eingeschränkt, dass die Fortsätze 16 nicht in den Gelenkspalt 7 hineinragen, wenn das Betätigungselement 10 maximal in Richtung des Pfeils 20 nach unten gedrückt wurde. Gleichzeitig ist die maximale Rotation der Betätigungsanordnung 9 jedoch so ausgelegt, dass die Sperrelemente 8 durch die Fortsätze 16 im Wesentlichen vollständig aus dem Gelenkspalt 7 in Richtung eines Pfeils 23 herausgedrückt wurden. Vorzugsweise ist der Gelenkspalt 7 sehr schmal. Vorzugsweise schliessen die Fortsätze 16 im Wesentlichen plan mit der den Gelenkspalt 7 bildenden Oberfläche des Gelenk-bildenden Abschnitts 6 des Fahrgestells 2 ab und die Sperrelemente 8 schliessen plan mit der den Gelenkspalt 7 bildenden Oberfläche des Gelenk-bildenden Abschnitts 5 der Lenkstange 4 ab, wenn das Betätigungselement 10 maximal in Richtung des Pfeils 20 hineingedrückt wurde.

In dieser Situation ist eine Drehung der Lenkstange 4 relativ zum Fahrgestell 2 möglich, wobei die Schraube 11 als Drehachse fungiert.

Durch die in Figur 3 angedeutete symmetrische Anordnung der Sperrelemente 8 und der Sperrelement-Aufnahmen 14 können die Sperrelemente 8 nach einer Drehung der Lenkstange 4 um 180° wieder in die Sperrelement-Aufnahmen 14 einfahren. Diese Situation ist in Figur 4 dargestellt. Hierbei handelt es sich um die Transport-Stellung des Tretrollers 1. In der Transport-Stellung verlaufen die gedachten Längsachsen des Rohrs 18 und der Trittfläche 21 im Wesentlichen parallel zueinander oder zumindest in einem sehr kleinen Winkel von vorzugsweise unter 15°. Ausgehend von der in Figur 4 dargestellten Transport-Stellung kann der Benutzer das Betätigungselement 10 in Richtung des Pfeils 20 eindrücken, was zum Verschwenken der Betätigungsanordnung 9 entlang des Pfeils 19 führt, wobei die Fortsätze 16 die Sperrelemente 8 in Richtung des Pfeils 23 aus den Sperrelement-Aufnahmen 14 herausdrücken. Auf diese Weise werden die Sperrelemente 8 aus dem Eingriff mit den Sperrelement-Aufnahmen 14 entfernt und geben den Gelenkspalt 7 frei, so dass ein Drehen der Lenkstange 4 um die von der Schraube 11 definierte Drehachse möglich ist.

In Figur 3 ist ferner ein Verbindungselement 24 erkennbar, welches eine Schraube, ein Federstift oder dergleichen sein kann. Dieses Verbindungselement 24 hält den Flansch-artigen Endabschnitt 17 und das Rohr 18 zusammen, so dass diese sich relativ zueinander nicht bewegen können. Dieses Verbindungselement 24 erlaubt aber auch, das Rohr 18 gegen ein anders gebautes Rohr (nicht dargestellt) auszutauschen. Beispielsweise kann das Rohr 18 am oberen Ende (nicht dargestellt) in einem üblichen Knauf enden, mit welchem der Tretroller 1 durch seitliche Neigung gesteuert wird. Um den Tretroller 1 zur Benutzung durch ein Kleinkind anzupassen, kann statt des vorstehend beschriebenen Rohrs 18 ein alternatives Rohr umfassend sowohl einen Steuerknauf oder dergleichen als auch eine Sitzschale oder einen Sitzkoffer für das Kleinkind montiert werden. Hierzu wird das Verbindungselement 24 gelöst und entfernt, das Rohr 18 entfernt und das alternative Rohr (nicht gezeigt) montiert. Das alternative Rohr wird dann mit Hilfe des Verbindungselemente 24 an dem Flansch-artigen Endabschnitt 17 befestigt. Dieses alternative Rohr bildet mit dem Flansch-artigen Endabschnitt 17 natürlich auch eine Lenkstange 4 im Sinne der vorliegenden Erfindung.

Anstelle des Knaufs kann in allen Ausführungsbeispielen auch an andere Lenkeinrichtungen gedacht sein, beispielsweise an einen quer zum Rohr 18 verlaufenden Lenker mit zwei Handgriffen (nicht dargestellt), wie er bei Fahrrädern üblich ist.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen:
Vorzugsweise ist der Gelenk-bildende Abschnitt 6 des Fahrgestells bzw. insbesondere der Flächenabschnitt 25 um etwa 45° zur Trittfläche 21 geneigt. Es kann aber auch an andere Winkel, insbesondere Winkel zwischen 40° und 50° gedacht sein.

Vorzugsweise wird die Schraube 11 in ein (nicht dargestelltes) Gewinde im Fahrgestell 2 eingeschraubt. Das Gewinde kann sich in der Schrauben-Aufnahme 15 befinden. Es ist natürlich auch denkbar, die Schraube 11 von unten einzusetzen, so dass der Schraubenkopf nicht am Flansch-artigen Endabschnitt 17 sondern am Fahrgestell 2 anliegt, und an einem Gewinde innerhalb des Flansch-artigen Endabschnitts 17 eingeschraubt wird.

Anstelle der Schraube 11 können die Drehachse und die formschlüssige Verbindung von Lenkstange 4 und Fahrgestell 2 auch auf andere Weise bereitgestellt werden. So kann anstelle einer Schraube 11 auch ein Bolzen oder dergleichen eingesetzt werden. Ferner können die Gelenk-bildenden Abschnitte 5, 6 durch geeignete Hinterschneidungen derart miteinander verbunden, bspw. ineinander eingesetzt werden, dass die Hinterschneidungen für die formschlüssige Verbindung sorgen und die Drehachse sich aus der Ausgestaltung beider Abschnitte 5, 6 selbst ergibt, ohne dass es eines Bolzens oder dergleichen als physisch vorhandener Drehachse bedarf.

Sind zwei Sperrelemente 8 und zwei korrespondierende Sperrelement-Aufnahmen 14 vorhanden, so umfasst die Betätigungsanordnung 9 vorzugsweise zwei Fortsätze 16. Alternativen sind denkbar. Vorzugsweise entspricht die Anzahl der Fortsätze 16 der Anzahl der Sperrelemente 8. Es sind auch Varianten des Tretrollers 1 denkbar, die genau ein Sperrelement 8 oder drei oder mehr Sperrelemente 8 umfassen. Bevorzugt weist die Betätigungsanordnung 9 in allen Ausführungsformen genau ein Betätigungselement 10 auf, so dass ein einfaches Bedienen, insbesondere durch einen einfachen Knopfdruck, stets möglich ist. Die Betätigungsanordnung 9 kann genau einen Drehpunkt 12 oder zwei Drehpunkte 12 oder mehr Drehpunkte 12 umfassen, auch zumindest eine Drehachse kann angedacht sein. Natürlich können genau zwei zweite Federn 22, genau eine zweite Feder 22 oder mehr als zwei zweite Federn 22 angedacht sein.

Obwohl in den Figuren nur eine mögliche Anordnung der Kombination aus Sperrelementen 8, Sperrelement-Aufnahmen 14 und Betätigungsanordnung 9 gezeigt ist, sind natürlich weitere Alternativen denkbar. Wie in der Explosionszeichnung nach Figur 2 gut erkennbar ist, sind in der gezeigten Ausführungsform die Sperrelemente 8 an der Lenkstange 4 festgelegt, während die Sperrelement-Aufnahmen 14 sich im Fahrgestell 2 befinden. Natürlich ist auch die umgekehrte Anordnung denkbar, so dass die Sperrelemente 8 am Fahrgestell 2 befestigt sind und die Sperrelement-Aufnahmen 14 an der Lenkstange 4, insbesondere am Flansch-artigen Endabschnitt 17 vorgesehen sind.

Auch die Anordnung, die Ausgestaltung und die Funktion der Betätigungsanordnung 9 kann verändert werden. In dem dargestellten Ausführungsbeispiel ist die Betätigungsanordnung 9 relativ zum Gelenkspalt 7 auf derselben Seite - nämlich am Fahrgestell 2 - angeordnet. Ein Betätigen des Betätigungselements 10 bewirkt hierbei, dass die Fortsätze 16 die Sperrelemente 8 aus dem Fahrgestell 2 bzw. den dort vorgesehenen Sperrelement-Aufnahmen 14 heraus drücken in Richtung auf die Lenkstange 4 zu, d.h. in Richtung auf die andere Seite des Gelenkspalts 7 zu. Diese Bewegung erfolgt also in Richtung eines Pfeils 23. Es ist jedoch auch denkbar, die Kinematik der Betätigungsanordnung 9 so zu verändern, dass die Fortsätze 16 die Sperrelemente 8 nicht zur gegenüberliegenden Seite des Gelenkspalts 7 drücken, sondern diese in die Gegenrichtung bewegen. In Bezug auf Figur 1 würde in einer solchen alternativen Anordnung das Betätigungsanordnung 9 dafür sorgen, dass die Sperrelemente 8 in Gegenrichtung des Pfeils 23 bewegt werden, wenn das Betätigungselement 10 betätigt wird. Dies kann durch geeignete alternative Anordnung des Drehpunkts 12, vorzugsweise in Verbindung mit einer veränderten Ausgestaltung der Betätigungsanordnung selbst erreicht werden. Sinnvollerweise wären die Sperrelemente 8 in einer solchen Variante natürlich am Fahrgestell 2 festgelegt. Bei Betätigung des Betätigungselements 10 würden die Sperrelemente 8 somit in der vorbeschriebenen alternativen Ausführungsform in Gegenrichtung des Pfeils 23 in das Fahrgestell 2 hinein bzw. von dem Flansch-artigen Endabschnitt 17 weg bewegt.

Allgemein kann gesagt werden, dass folgende Anordnungs-Kombinationen der vorbeschriebenen Bauteile 8, 9, 14 denkbar sind:
Erstens können Betätigungsanordnung 9 und Sperrelement(e) 8 auf gegenüberliegenden Seiten des Gelenkspalts 7 angeordnet sein.

Die Sperrelement-Aufnahmen 14 sind jeweils gegenüber der Sperrelement(e) 8 angeordnet. Die "gegenüberliegenden Seiten" beziehen sich jeweils auf den Gelenkspalt 7 und geben somit an, ob die betreffenden Bauteile gemeinsam am Fahrgestell 2 oder an der Lenkstange 4 (bzw. an deren Gelenk-bildenden Abschnitten 5, 6) angeordnet sind, oder ob ein Bauteil an der Lenkstange 4 und das andere am Fahrgestell 2 festgelegt ist.

Zweitens und unabhängig von der Auswahl der vorbeschriebenen ersten Alternative können die Sperrelement(e) 8 entweder in der Lenkstange 4, dort insbesondere - falls vorhanden - im Flansch-artigen Abschnitt 17, oder alternativ im Fahrgestell 2 angeordnet sein. Die Anordnung der Sperrelement-Aufnahmen 14 auf der gegenüberliegenden Seite des Gelenkspalts 7 ist durch die Anordnung der Sperrelemente 8 vorgegeben, die Anordnung der Betätigungsanordnung 9 jedoch nicht.

Die Lenkstange 4 kann einstückig gefertigt sein. Alternativ kann die Lenkstange 4, wie in den Figuren gezeigt, ein Rohr 18 und einen Flansch-artigen Endabschnitt 17 als separate aber miteinander fest verbundene Bauteile umfassen. Der Flansch-artige Endabschnitt 17 kann auch kleiner ausgeführt sein, als in den Figuren dargestellt. Vorzugsweise ist der Flansch-artige Endabschnitt jedoch vorhanden und hat einen Durchmesser von vorzugsweise über 70 Millimeter, bevorzugt 70 bis 90 Millimeter.

Vorzugsweise ist das Betätigungselement 10 ein Druckknopf wie in Figur 3 ersichtlich. Es kann aber auch an andere Betätigungselemente gedacht sein. Vorzugsweise ist das Betätigungselement 10 wie in Figur 3 gezeigt an einer Vorderseite des Fahrgestells 2 befestigt, so dass ein versehentliches Betätigen während der Fahrt ausgeschlossen ist. Andere Anordnungen sind aber denkbar. Vorzugsweise schliesst das Betätigungselement 10 bündig mit einem es umgebenden Rahmen oder mit einer es umgebenden Oberfläche des Fahrgestells 2 ab oder ist sogar ein wenig darin versenkt, was ein versehentliches Betätigen ebenfalls erschwert. Alternativ kann das Betätigungselement 10 auch ein Stück über die Oberfläche des Fahrgestells 2 herausragen.

Die Betätigungsanordnung 9 kann ein- oder mehrstückig sein. In den Figuren umfasst die Betätigungsanordnung 9 das Betätigungselement 10, den Drehpunkt 12 und die Fortsätze 16. Diese drei Abschnitte 10, 12, 16 müssen nicht zwingend einstückig gestaltet sein. Es kann an mehrstückige Ausführungsformen gedacht sein, wobei die einzelnen Teile auch an mehreren Drehpunkten oder Drehachsen aufgehängt oder andersartig gelagert sein können, um eine komplexere Kinematik zu erlauben.

Kugellager oder dergleichen oder alternativ andere reibungs-vermindernde Bauelemente können irgendwo innerhalb der Gelenk-bildenden Abschnitte 5, 6 und insbesondere innerhalb der Flächenabschnitte 25 vorgesehen sein. (Der zum Flächenabschnitt 25 korrespondierende bzw. gegenüber des Gelenkspalts 7 liegende Flächenabschnitt des Flansch-artigen Endabschnitts 17 ist in Figur 3 auf Grund der gewählten Perspektive nicht erkennbar). Die Flächenabschnitte 25 selbst können auch aus reibungsarmem Material gefertigt sein.

### Bezugszeichenliste

| | | | | | |
|---|---|---|---|---|---|
| 1 | Tretroller | 34 | | | |
| 2 | Fahrgestell | 35 | | | |
| 3 | Vorderrad | 36 | | | |
| 4 | Lenkstange | 37 | | | |
| 5 | Gelenk-bildender Abschnitt der Lenkstange | 38 | | | |
| 6 | Gelenk-bildender Abschnitt des Fahrgestells | 39 | | | |
| 7 | Gelenkspalt | 40 | | | |
| 8 | Sperrelement | 41 | | | |
| 9 | Betätigungsanordnung | 42 | | | |
| 10 | Betätigungselement | 43 | | | |
| 11 | Schraube | 44 | | | |
| 12 | Drehpunkt | 45 | | | |
| 13 | Feder | 46 | | | |
| 14 | Sperrelement-Aufnahme | 47 | | | |
| 15 | Schrauben-Aufnahme | 48 | | | |
| 16 | Fortsatz | 49 | | | |
| 17 | Flansch-artiger Endabschnitt | 50 | | | |
| 18 | Rohr/Stange | 51 | | | |
| 19 | Pfeil | 52 | | | |
| 20 | Pfeil | 53 | | | |
| 21 | Trittfläche | 54 | | | |
| 22 | Zweite Feder | 55 | | | |
| 23 | Pfeil | 56 | | | |
| 24 | Verbindungselement | 57 | | | |
| 25 | Flächenabschnitt | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Tretroller (1) mit einem Fahrgestell (2), zumindest einem Vorderrad (3), zumindest einem Hinterrad, sowie einer Lenkstange (4),
wobei die Lenkstange (4) mit dem Fahrgestell (2) formschlüssig verbunden ist wobei ein Abschnitt (5) der Lenkstange (4) mit einem Abschnitt (6) des Fahrgestells (2) oder mit einem am Fahrgestell (2) befestigten Abschnitt ein Drehgelenk bildet, welches eine Drehung der Lenkstange (4) relativ zum Fahrgestell (2) erlaubt, so dass die Lenkstange (4) zwischen einer fahrbereiten Stellung und einer Transport.-Stellung hin- und herbewegt werden kann, wobei zwischen einander zugewandten Flächen oder Flächenabschnitten der Lenkstange (4) und des Fahrgestell-Abschnitts (6) oder des am Fahrgestell (2) befestigten Abschnitts ein Gelenkspalt (7) vorliegt,
wobei entweder das Fahrgestell (2) oder der am Fahrgestell (2) befestigte Abschnitt (6) oder der Abschnitt (5) der Lenkstange (4) ein Sperrelement (8) umfasst, welches zwischen einer eingefahrenen und einer ausgefahrenen Position hin- und herbewegt werden kann,
wobei das Sperrelement (8) in der eingefahrenen Position nicht in den Gelenkspalt (7) hineinragt, um die Drehung der Lenkstange (4) relativ zum Fahrgestell (2) zu erlauben,
und wobei das Sperrelement (8) in der ausgefahrenen Position in den Gelenkspalt (7) hineinragt, so dass das Fahrgestell (2) oder der am Fahrgestell (2) befestigte Abschnitt mit dem Abschnitt der Lenkstange (4) in Wechselwirkung tritt, um die Drehung der Lenkstange (4) relativ zum Fahrgestell (2) zu blockieren, wobei
das Fahrgestell (2) oder die Lenkstange (4) mit einer Betätigungsanordnung (9) für das Sperrelement (8) verbunden ist,
wobei die Betätigungsanordnung (9) ein Betätigungselement (10) umfasst, welches von einem Benutzer betätigt werden kann, und
wobei die Betätigungsanordnung (9) eingerichtet ist, um bei einer Betätigung des Betätigungselements (10) durch einen Benutzer das Sperrelement (8) von der ausgefahrenen Position in die eingefahrene Position zu bewegen,
**dadurch gekennzeichnet, dass** die Betätigungsanordnung (9) und das Sperrelement (8) auf gegenüberliegenden Seiten in Bezug auf den Gelenkspalt (7) angeordnet sind.

2. Tretroller (1) nach Anspruch 1, **dadurch gekennzeichnet, dass** der Abschnitt (5) der Lenkstange (4) ein flansch-artiger Endabschnitt (17) ist.

3. Tretroller (1) nach einem der vorangehenden Ansprüche, **dadurch gekennzeichnet, dass** der Tretroller (1) eine Trittfläche (21) umfasst, wobei der Abschnitt (6) des Fahrgestells oder der an dem Fahrgestell befestigte Abschnitt in einem Winkel von 40° bis 50° zur Trittfläche (21) geneigt ist, wobei ferner der Abschnitt (5) der Lenkstange (4) relativ zu einer gedachten Längsachse der Lenkstange (4) ebenfalls um 40° bis 50° geneigt ist, so dass die Lenkstange (4) relativ zur Trittfläche (21) in einem Winkel von 80° bis 100° montiert werden kann.

4. Tretroller (1) nach einem der vorangehenden Ansprüche, **dadurch gekennzeichnet, dass** der Tretroller (1) derart eingerichtet ist, dass das Drehgelenk eine Drehung der Lenkstange (4) um zumindest 180° erlaubt.

5. Tretroller (1) nach einem der vorangehenden Ansprüche, **gekennzeichnet durch** eine Sperrelement-Aufnahme (14) zur Aufnahme des Sperrelements (8) und eine Schrauben- oder Bolzen-Aufnahme (15) zur Aufnahme einer Schraube (11) oder eines Bolzens, wobei die Schraube (11) oder der Bolzen eine Drehachse des Drehgelenks definiert.

6. Tretroller (1) nach Anspruch 5, **dadurch gekennzeichnet**, ein Abstand zwischen der Sperrelement-Aufnahme (14) und der Schrauben- oder Bolzenaufnahme (15) zumindest 30 mm beträgt.

7. Tretroller (1) nach einem der vorangehenden Ansprüche, **dadurch gekennzeichnet, dass** die den Gelenkspalt (7) bildenden Flächen einen Durchmesser von zumindest 70 Millimetern aufweisen.

8. Tretroller (1) nach einem der vorangehenden Ansprüche, **dadurch gekennzeichnet, dass** die Lenkstange einen Flansch-artigen Endabschnitt (17) umfassend den Abschnitt (5) der Lenkstange (4) sowie ein mit dem Flansch-artigen Endabschnitt (17) verbundenes Rohr (18) umfasst, wobei der Flansch-artige Endabschnitt (17) und das Rohr (18) durch ein Verbindungselement (24) miteinander verbunden sind, wobei das Rohr (18) ein Sitzschale oder einen Sitzkoffer umfassen kann.

## Claims

1. Scooter (1) with a chassis (2), at least one front wheel (3), at least one rear wheel and a handlebar (4),
wherein the handlebar (4) is positively connected to the chassis (2),
wherein a section (5) of the handlebar (4) forms a swivel joint with a section (6) of the chassis (2) or with a section attached to the chassis (2), which allows the handlebar (4) to rotate relative to the chassis (2), so that the handlebar (4) can be moved back and forth between a ready-to-run position and a transport position,
wherein a joint gap (7) is present between surfaces facing each other or surface sections of the handlebar (4) and the chassis section (6) or the section attached to the chassis (2)
wherein either the chassis (2) or the section (6) attached to the chassis (2) or the section (5) of the handlebar (4) comprises a locking element (8) which can be moved back and forth between a retracted and an extended position,
wherein the locking element (8) does not protrude into the joint gap (7) in the retracted position to allow rotation of the handlebar (4) relative to the chassis (2)
and wherein the locking element (8) protrudes into the joint gap (7) in the extended position, so that the chassis (2) or the section attached to the chassis (2) interacts with the section of the handlebar (4) to block the rotation of the handlebar (4) relative to the chassis (2),
wherein the chassis (2) or the handlebar (4) is connected to an actuating arrangement (9) for the locking element (8)
wherein the actuating arrangement (9) comprises an actuating element (10) which can be actuated by a user, and
wherein the actuating arrangement (9) is arranged to move the locking element (8) from the extended position to the retracted position when the actuating element (10) is actuated by a user,
**characterized in that**
the actuating arrangement (9) and the locking element (8) are situated on opposite sides with respect to the joint gap (7).

2. Scooter (1) according to claim 1 **characterized in that** the section (5) of the handlebar (4) is a flange-like end section (17).

3. Scooter (1) according to one of the preceding claims, **characterized in that** the scooter (1) comprises a tread surface (21), wherein the section (6) of the chassis or the section attached to the chassis is inclined at an angle of 40° to 50° relative to the tread surface (21), wherein further the section (5) of the handlebar (4) is also inclined by 40° to 50° relative to an imaginary longitudinal axis of the handlebar (4), so that the handlebar (4) can be mounted at an angle of 80° to 100° relative to the tread surface (21).

4. Scooter (1) according to one of the preceding claims, **characterized in that** the scooter (1) is set up in such a way that the swivel joint allows the handlebar (4) to rotate by at least 180°.

5. Scooter (1) according to one of the preceding claims, **characterized in** a locking element receptacle (14) for receiving the locking element (8) and a screw or bolt receptacle (15) for receiving a screw (11) or a bolt, wherein the screw (11) or the bolt defines an axis of rotation of the swivel joint.

6. Scooter (1) according to claim 5, **characterized in that** a distance between the locking element receptacle (14) and the screw or bolt receptacle (15) is at least 30 mm.

7. Scooter (1) according to one of the preceding claims, **characterized in that** the surfaces forming the joint gap (7) have a diameter of at least 70 millimetres.

8. Scooter (1) according to one of the preceding claims, **characterized in that** the handlebar comprises a flange-like end section (17) comprising the section (5) of the handlebar (4) and a tube (18) connected to the flange-like end section (17), wherein the flange-like end section (17) and the tube (18) are connected to each other by a connection element (24), wherein the tube (18) may comprise a seat shell or a seat case.

## Revendications

1. Trottinette (1) comportant un châssis (2), au moins une roue avant (3), au moins une roue arrière, ainsi qu'un guidon (4), dans laquelle le guidon (4) est relié au châssis (2) par complémentarité de forme dans laquelle une section (5) du guidon (4) forme, avec une section (6) du châssis (2) ou avec une section fixée sur le châssis (2) une articulation rotative, qui permet une rotation du guidon (4) par rapport au châssis (2), de sorte que le guidon (4) peut être déplacé en va-et-vient entre une position prête à rouler et une position de transport,
dans laquelle un espace d'articulation (7) est présent entre des surfaces ou des sections de surface du guidon (4) et de la section de châssis (6) ou de la section fixée sur le châssis (2) qui se font face,
dans laquelle soit le châssis (2) soit la section (6) fixée sur le châssis (2) soit la section (5) du guidon (4) comprend un élément de blocage (8), qui peut se déplacer en va-et-vient entre une position rétractée et une position déployée,
dans laquelle l'élément de blocage (8), dans la position rétractée, ne fait pas
saillie dans l'espace d'articulation (7), afin de permettre la rotation du guidon (4) par rapport au châssis (2),
et dans laquelle l'élément de blocage (8), dans la position déployée, fait saillie dans l'espace d'articulation (7), de sorte que le châssis (2) ou la section fixée sur le châssis (2) interagit avec la section du guidon (4) pour bloquer la rotation du guidon (4) par rapport au châssis (2), dans laquelle
le châssis (2) ou le guidon (4) est relié à un agencement d'actionnement (9) pour l'élément de blocage (8),
dans laquelle l'agencement d'actionnement (9) comprend un élément d'actionnement (10), qui peut être actionné par un utilisateur et
dans laquelle l'agencement d'actionnement (9) est conçu pour, lors d'un actionnement de l'élément d'actionnement (10) par un utilisateur, déplacer l'élément de blocage (8) de la position déployée à la position rétractée,
**caractérisée en ce que**
l'agencement d'actionnement (9) et l'élément de blocage (8) sont agencés sur des côtés opposés par rapport à l'espace d'articulation (7).

2. Trottinette (1) selon la revendication 1, **caractérisée en ce que** la section (5) du guidon (4) est une section d'extrémité (17) de type bride.

3. Trottinette (1) selon l'une des revendications précédentes,
**caractérisée en ce que** la trottinette (1) comprend une surface de marche (21), dans laquelle la section (6) du châssis ou la section fixée sur le châssis est inclinée selon un angle de 40° à 50° par rapport à la surface de marche (21), dans laquelle en outre la section (5) du guidon (4) est inclinée par rapport à un axe longitudinal imaginaire du guidon (4) également de 40° à 50°, de sorte que le guidon (4) peut être monté par rapport à la surface de marche (21) selon un angle de 80° à 100°.

4. Trottinette (1) selon l'une des revendications précédentes,
**caractérisée en ce que** la trottinette (1) est conçue de sorte que l'articulation rotative permet une rotation du guidon (4) d'au moins 180°.

5. Trottinette (1) selon l'une des revendications précédentes, **caractérisée par** un logement d'élément de blocage (14) pour le logement de l'élément de blocage (8) et un logement de vis ou boulon (15) pour le logement d'une vis (11) ou d'un boulon, dans laquelle la vis (11) ou le boulon définit un axe de rotation de l'articulation rotative.

6. Trottinette (1) selon la revendication 5, **caractérisée en ce qu'**un écart entre le logement d'élément de blocage (14) et le logement de vis ou de boulon (15) est d'au moins 30 mm.

7. Trottinette (1) selon l'une des revendications précédentes,
**caractérisée en ce que** les surfaces formant l'espace d'articulation (7) présentent un diamètre d'au moins 70 millimètres.

8. Trottinette (1) selon l'une des revendications précédentes,
**caractérisée en ce que** le guidon comprend une section d'extrémité (17) de type bride comprenant la section (5) du guidon (4) ainsi qu'un tube (18) relié à la section d'extrémité (17) de type bride, dans laquelle la section d'extrémité (17) de type bride et le tube (18) sont reliés l'un à l'autre par l'intermédiaire d'un élément de liaison (24), dans laquelle le tube (18) peut comprendre une assise ou un coffre formant siège.
